# EUROPÄISCHE PATENTSCHRIFT

(11) **EP 4 225 468 B1**
(45) Veröffentlichungstag und Bekanntmachung des Hinweises auf die Patenterteilung: **28.01.2026**
(21) Anmeldenummer: 21794473.5
(22) Anmeldetag: 06.10.2021
(51) Int. Cl.: B01D 33/21, B01D 33/50

(54) **ABSAUGVORRICHTUNG FÜR EINEN SCHEIBENFILTER SOWIE VERFAHREN ZUM FILTRIEREN VON FLÜSSIGKEITEN MIT EINEM SCHEIBENFILTER**
SUCTION DEVICE FOR A DISC FILTER, AND METHOD FOR FILTERING LIQUIDS BY MEANS OF A DISC FILTER
DISPOSITIF D'ASPIRATION POUR FILTRE À DISQUE ET PROCÉDÉ DE FILTRATION DE LIQUIDES AU MOYEN D'UN FILTRE À DISQUE

(30) Priorität: 06.10.2020 DE 102020126133
(43) Veröffentlichungstag der Anmeldung: 16.08.2023
(73) Patentinhaber: Mecana AG, 8864 Reichenburg (CH)
(72) Erfinder: GRABBE, Ulrich, 8863 Buttikon (CH)
(74) Vertreter: Patentanwaltskanzlei Vièl & Wieske PartGmbB
(86) Internationale Anmeldenummer: PCT/EP2021/077496
(87) Internationale Veröffentlichungsnummer: WO 2022/074030

(56) Entgegenhaltungen:
- EP-A1- 2 752 229
- WO-A1-2016/030903
- DE-A1- 19 811 255
- KR-B1- 101 398 838

## Beschreibung

Die Erfindung betrifft einen Scheibenfilter mit einer Absaugvorrichtung, wobei die Absaugvorrichtung mindestens einen Saugbalken pro scheibenförmigen Filterkörper und einen zum Absaugen der Verunreinigungen des Filtertuches ausgebildeten Absaugschlitz sowie eine Absaugpumpe zum Absaugen der Verunreinigungen aufweist, wobei der Saugbalken radial zu der Drehachse des Scheibenfilters verfahrbar ist und der Abstand des Saugbalkens von dem Filtertuch verstellbar ist.

Scheibenfilter werden beispielsweise in der Abwasserreinigung eingesetzt. Sie bestehen aus einem oder mehreren scheibenförmigen Filterkörpern, die einen Tragrahmen aufweisen, der mit Filtertuch bespannt ist. Jeder scheibenförmige Filterkörper kann dabei aus mehreren Sektoren zusammengesetzt sein, die jeweils mit einem sackartigen Filtertuch bespannt sind.

Die einfachste Ausführung eines Filtertuchs ist ein einschichtiges Gewebe, welches durch die Siebwirkung der Maschen Partikel aus dem Wasser zurückhalten kann. In der Regel sind Filtertücher mehrschichtig aufgebaut. Sie bestehen aus einem Stützgewebe mit relativ großer Maschenweite und einer filteraktiven Schicht. Diese filteraktive Schicht weist Fäden und Filamente auf, die mehrfach übereinander liegen, um mehrfach gekrümmte Durchflusskanäle zu bilden, in denen auch Feststoffpartikel, die kleiner sind als der freie Querschnitt der Fadenzwischenräume durch mechanisch oder durch Absorption an den Fäden zurückgehalten werden. Eine solche filteraktive Schicht mit Tiefenfilterwirkung wird in der Regel als Nadelfilz oder Wirrfaservlies ausgebildet.

Vorteilhafter ist die Ausbildung des Filtertuches als sogenannter Polstoff, d. h. als ein Flausch-, Plüsch- oder Samtgewebe, das aus einem relativ großmaschigen Stützgewebe und einem z. B. in W-Bindung eingewirkten Flor aus Florfäden besteht. Die Florfäden liegen im Filtrierbetrieb an der Anströmseite des Filtertuches, und ihre Länge, Steifigkeit und Dichte sind so bemessen, dass die Florfäden durch die anströmende Flüssigkeit und durch die mechanische Einwirkung der Sauglippe beim Abreinigungsprozeß in eine zum Stützgewebe annähernd parallele Position umgelegt werden und sich dadurch mehrlagig übereinanderlegen und einen Tiefenfilter bilden, wobei sich zwischen den übereinanderliegenden Florfäden zahlreiche enge, verwinkelte und mehrfach gekrümmte Durchflusskanäle bilden, in denen auch Feststoffpartikel, deren Größe kleiner als die lichte Weite der Durchflusskanäle ist, teils mechanisch und teils durch Absorption festgehalten werden können.

Der Durchflusswiderstand des Filtertuchs ist relativ hoch und nimmt mit zunehmender Verstopfung der Durchflusskanäle rasch zu. Das Filtertuch muss daher in relativ kurzen Zeitabständen abgereinigt werden. Dies geschieht in der Regel durch Rückspülen, d. h. durch Hindurchleiten von Flüssigkeit, wie beispielsweise Frischwasser oder Filtrat, durch das Filtertuch in der der Filterrichtung entgegengesetzten Richtung. Das Rückspülen kann auf der ganzen Fläche des Filtertuches gleichzeitig oder nur an einem Teilbereich des Filtertuches, der nach und nach über dessen Fläche bewegt wird, durchgeführt werden.

Beim Rückspülen von Polstoff sind die Florfäden einer vom Stützgewebe weg gerichteten Flüssigkeitsströmung ausgesetzt und werden dadurch relativ zum Stützgewebe aufgerichtet und stehen dann weitgehend zueinander und zur Strömungsrichtung parallel, wodurch sich das Volumen der Florschicht stark vergrößert und die zwischen den Florfäden bestehenden Durchflusskanäle geöffnet und begradigt werden. Dadurch wird einerseits der Durchflusswiderstand für die Rückspülflüssigkeit verringert, sodass diese mit hoher Geschwindigkeit zwischen den Florfäden durchströmen kann, und andererseits werden die zuvor in den Durchflusskanälen mechanisch blockierten Feststoffpartikel freigegeben, sodass sie von der Rückspülflüssigkeit unter Überwindung der Absorptionskräfte abgelöst und weggespült werden können.

Vorrichtungen und Verfahren für das Rückspülen von Filtertüchern sind bekannt.

Die EP 2 752 229 A1 betrifft eine Absaugvorrichtung für Fabrikfilter. Die Absaugvorrichtung weist eine Saugplatte mit einem Hauptsaugschlitz und einen parallel durch eine Trennwand abgegrenzten Untersaugschlitz auf. Die Polfäden werden beim Durchlaufen des Untersaugschlitzes verzögert gerichtet und schwanken, um sich dann im Hauptsaugschlitz schnell zu richten. Der Rückspüleffekt wird dadurch verbessert.

Die WO 00/21638 beschreibt eine Rückspülvorrichtung für einen Trommelfilter. Die Rückspülvorrichtung weist eine Rückspüldüse, die radial auswärts von den Filtermedien angeordnet ist, um einen Strom von Hochdruckflüssigkeit radial nach innen gegen die Außenfläche der Filtermedien zu richten, wodurch Sedimente, die sich auf der radial inneren Fläche davon angesammelt haben, davon entfernt werden.

Aus der AU 200021355 B2 ist eine Reinigungsvorrichtung für Filterstoff eines Drehscheibenfilters oder eines Trommelfilters bekannt. Die Reinigungsvorrichtung umfasst mindestens eine Sprühdüse, die geeignet ist, Reinigungsflüssigkeit auf einen Teil des Filtertuchs in einer der Filterrichtung entgegengesetzten Richtung zu sprühen. Darüber hinaus umfasst der Apparat eine Antriebsvorrichtung zur Erzeugung einer Hin- und Herbewegung der Sprühdüse. Die Antriebsvorrichtung hat eine Kupplung, die die Drehbewegung der Trommel in die Hin- und Herbewegung der Sprühdüse in einem solchen Verhältnis umwandelt, dass die Drehbewegung der Trommel und die Hin- und Herbewegung der Sprühdüse gegeneinander phasenverschoben sind.

Die AU 2008217733 B2 betrifft eine Vorrichtung zur Reinigung von Filterstoff eines Drehscheibenfilters. Die Vorrichtung weist eine Spülrampe auf, auf der mindestens eine Sprühdüse angeordnet ist, wobei die Sprühdüse so angeordnet ist, dass sie ein Reinigungsfluid auf das Filtertuch in einer Richtung entgegengesetzt zu einer Filterrichtung sprüht, wobei die Spülrampe eine Antriebsvorrichtung zum Bewegen der Spülrampe entlang einer Längsrichtung des Filters während der Reinigung aufweist. Auf der Spülrampe sind zwei in einer Ebene im Wesentlichen senkrecht zu der Drehachse des Drehscheibenfilters drehbare Sprühdüsen angeordnet. Die Düsen sind auf beiden Seiten eines scheibenförmigen Filterelements angeordnet und zueinander und zu dem Filtertuch auf einer Seite des scheibenförmigen Filterelements ausgerichtet.

Die CA 2813927 A1 beschreibt eine Vorrichtung zum Reinigen eines Filtertuchs eines Drehscheibenfilters. Die Vorrichtung besitzt ein zwischen zwei benachbarten parallelen Filterelementen des Drehscheibenfilters angeordnetes Spülrohr. Dabei sind eine Vielzahl von Sprühdüsen paarweise um das Spülrohr herum angeordnet, wobei ihr jeweiliger Auslass sich in einem Abstand von dem jeweiligen Filterelement befindet, der größer als die Hälfte des Abstands zwischen zwei benachbarten parallelen Filterelementen ist.

Die US 2017/0165 597 A1 beschreibt eine Vorrichtung gemäß dem Oberbegriff, welche insbesondere für metallische Filter verwendet wird.

Die DE 198 11 255 A1 beschreibt ein Verfahren und eine Vorrichtung zur Rückspülung einer Filterscheibe, wobei ein Volumenstrom eines flüssigen Reinigungsmittels entgegengesetzt zu der Durchflußrichtung der Filterscheibe durch das zu reinigende Filterelement geführt wird.

Die EP 0 413 178 B1 betrifft einen Scheibenfilter zur mechanischen Reinigung biologisch behandelten Abwassers mit auf einem drehbar gelagerten, antreibbaren Tragrohr angeordneten, je zwei absaugbare Filterflächen aufweisenden Filterscheiben. Eine Absaugvorrichtung erstreckt sich radial zum Tragrohr.

Die EP 0 958 028 B1 offenbart ein Verfahren zum Filtrieren von Flüssigkeiten mit einem Filtertuch mit einem Stützgewebe und auf der von der Flüssigkeit angeströmten Seite einen Flor aus Florfäden. Das Rückspülen erfolgt durch einen Saugbalken. Beim Rückspülen werden die Florfäden im Bereich des Saugschlitzes zu einer vom Stützgewebe abstehenden Position aufgerichtet, wobei die Florfäden vor dem Erreichen des Saugschlitzes einer mechanischen Einwirkung durch eine ihnen zugewandte Fläche des Saugbalkens ausgesetzt werden, durch die sie am Aufrichten gehindert werden.

Die JP 6 158 581 B2 beschreibt eine Filtervorrichtung mit scheibenartigen Filtermaterialien. Zwischen den Filterelementen ist eine Reinigungseinrichtung zur Rückspülung vorgesehen.

Die KR 101398838 B1 beschreibt einen Scheibenfilter mit einer Absaugeinrichtung, die einen Saugbalken mit einem Absaugschlitz aufweist, der relativ zum Scheibenfilter verfahrbar ist.

Die WO 2026/030903 A1 beschreibt einen Filter zum Filtern eines Flüssigkeitsstroms, der eine Filteranordnung mit einer Anzahl von Filterscheiben aufweist, die koaxial entlang eines zentralen Strömungspfads innerhalb eines Druckbehälters angeordnet sind.

Der vorliegenden Erfindung liegt die Aufgabe zugrunde, Absaugvorrichtungen für Scheibenfilter zu optimieren.

Die Aufgabe wird bei einer Absaugvorrichtung gemäß dem Oberbegriff des Anspruchs 1 dadurch gelöst, dass das Filtertuch aus einem Polstoff besteht und dass die Breite des Saugbalkens kleiner als der Radius der scheibenförmigen Filterkörper ist, wobei der Saugbalken von einer Position, die dem kleinsten Radius des scheibenförmigen Filterkörpers entspricht, bis zu einer Position, die dem größten Radius des scheibenförmigen Filterkörpers entspricht, verfahrbar ist.

Dabei ist die Breite des Saugbalkens kleiner als der Radius der scheibenförmigen Filterkörper. Besonders bevorzugt entspricht die Breite des Saugbalkens einem Drittel des Radius der scheibenförmigen Filterkörper. Der Saugbalken kann von einer Position, die dem kleinsten Radius des scheibenförmigen Filterkörpers entspricht, bis zu einer Position, die dem größten Radius des scheibenförmigen Filterkörpers entspricht, verfahren werden. Auf diese Weise kann die ganze Fläche des Filtertuchs des scheibenförmigen Filterkörpers abgefahren und über den Saugbalken zurückgespült werden. Das Verfahren des Saugbalkens kann kontinuierlich von der Position mit dem kleinsten Radius zu der Position mit dem größten Radius und zurück erfolgen. Alternativ kann das Verfahren des Saugbalkens stufenweise erfolgen. Beispielsweise kann der Saugbalken in zeitlichen Abständen oder nach jeder Umdrehung des Scheibenfilters einen Schritt in radialer Richtung verfahren werden. Dabei kann der Saugbalken in jeder Position im Wasser eingetaucht sein, was ein besonders effektives Rückspülen ermöglicht.

Besonders vorteilhaft ermöglicht das radiale Verfahren des Saugbalkens einen schmaleren Saugbalken. Durch den schmaleren Saugbalken reduziert sich die von dem Saugbalken jeweils abgesaugte Fläche des Filtertuchs, was die Saugleistung erhöht. Im Vergleich zu Anordnungen von mehreren Saugbalken in einer Reihe radial von der Drehachse des Scheibenfilters ist an der vorliegenden Absaugvorrichtung vorteilhaft, dass keine zusätzlichen Ventile zum Ansteuern der einzelnen Saugbalken durch die Absaugpumpe oder eine Mehrzahl von Absaugpumpen nötig sind. Dadurch können fehleranfällige mechanische Teile eingespart werden, was die Betriebs- und Wartungskosten der Absaugvorrichtung reduziert.

Besonders vorteilhaft ist die Ausbildung des Filtertuches als Polstoff. Die Florfäden bilden im Filtrierbetrieb einen Tiefenfilter mit zahlreichen engen, verwinkelten und mehrfach gekrümmte Durchflusskanälen in denen auch Feststoffpartikel, deren Größe kleiner als die lichte Weite der Durchflusskanäle ist, teils mechanisch und teils durch Absorption festgehalten werden können.

Beim Rückspülen werden die Durchflusskanäle durch die vom Stützgewebe weg gerichteten Flüssigkeitsströmung geöffnet und begradigt. Dadurch wird einerseits der Durchflusswiderstand für die Rückspülflüssigkeit verringert, sodass diese mit hoher Geschwindigkeit zwischen den Florfäden durchströmen kann, und andererseits werden die zuvor in den Durchflusskanälen mechanisch blockierten Feststoffpartikel freigegeben, sodass sie von der Rückspülflüssigkeit unter Überwindung der Absorptionskräfte abgelöst und weggespült werden können. Durch die jüngere Breite des Saugbalkens und die damit verbundene höhere Saugleistung kann bei gleicher Pumpleistung eine höhere Rückspülgeschwindigkeit erreicht werden, wodurch die Reinigungswirkung des Rückspülens erhöht wird.

Durch die Verstellung des Abstands des Saugbalkens von dem Filtertuch kann das Rückspülen abhängig von dem zu reinigenden Filtertuch und der zu filtrierenden Flüssigkeit optimiert werden. Durch den Flüssigkeitsstrom wird das Filtertuch von dem Saugbalken angezogen, wodurch eine gewisse Auslenkung des Filtertuchs erfolgt. Der Abstand des Saugbalkens von dem Filtertuch sollte dabei so bemessen sein, dass das Filtertuch in Kontakt mit der ganzen Fläche der Saugschlitze des Saugbalkens bleibt.

Eine bevorzugte Ausgestaltung der Erfindung sieht vor, dass in der Lücke zwischen jeweils zwei scheibenförmigen Filterkörpern ein Saugbalken vorgesehen ist.

Dabei weist der Saugbalken Saugschlitze zum Absaugen der beiden Filtertücher der scheibenförmigen Filterkörper auf. Besonders vorteilhaft können dadurch mit einem Saugbalken zwei Filtertücher gleichzeitig abgesaugt werden.

Eine Ausgestaltung der Erfindung besteht darin, dass der Saugbalken linear verfahrbar ist.

Der Saugbalken ist dabei linear in zu der Drehachse des Scheibenfilters radialer Richtung verfahrbar. Der Saugbalken wird dabei von der Position mit dem kleinsten Radius der scheibenförmigen Filterkörper zu der Position mit dem größten Radius der scheibenförmigen Filterkörper verfahren, um die gesamte Fläche des Filtertuchs der scheibenförmigen Filterkörper abzusaugen.

Eine weitere Ausgestaltung der Erfindung besteht darin, dass der Saugbalken über einen Saugarm in einer Pendelbewegung verfahrbar ist.

Dabei kann der Saugarm aus einem steifen Material ausgebildet sein. Der Saugbalken befindet sich an einem Ende des Saugarms und wird durch eine Pendelbewegung von der Position mit dem kleinsten Radius des scheibenförmigen Filterkörpers zu der Position mit dem größten Radius des scheibenförmigen Filterkörpers verfahren. Vorteilhaft ist der Saugarm lang genug, dass der Saugbalken sich zu jedem Punkt der Pendelbewegung unter der Wasseroberfläche befindet.

Dabei ist es zweckmäßig, dass die Absaugvorrichtung im Drehpunkt der Saugbalken eine Sammelleitung, die parallel zur Drehachse des Scheibenfilters angeordnet ist, aufweist.

Über die Sammelleitung wird das Wasser zum Rückspülen des Filtertuches von den Saugbalken abgeführt. Dabei können mehrere Saugbalken mit der Sammelleitung verbunden sein. Die Sammelleitung kann dabei aus einem verwindungssteifen Material bestehen, sodass die Pendelbewegung über die Sammelleitung und den Saugarm auf die Saugbalken übertragen wird.

Dabei ist es vorteilhaft, dass die Sammelleitung über eine flexible Schlauchverbindung mit der Absaugpumpe verbunden ist.

Auf diese Weise kann auch bei einer Drehung der Sammelleitung diese mit der Absaugpumpe verbunden werden.

Eine Ausgestaltung der Erfindung besteht darin, dass der Saugbalken über einen vom Rotationsmotor des Scheibenfilters entkoppelten Positionierungsantrieb verfahrbar ist.

Vorteilhaft wird durch die Entkopplung des Positionierungsantriebs von dem Rotationsmotor des Scheibenfilters vermieden, dass der Saugbalken immer über die gleiche Strecke über das Filtertuch verfahren wird. Der von dem Rotationsmotor des Scheibenfilters entkoppelte Rotationsantrieb erlaubt vorteilhaft eine flexible Anpassung des Abfahrens des Saugbalkens an den Betriebszustand des Scheibenfilters. Beispielsweise kann der Saugbalken kontinuierlich oder stufenweise radial über das Filtertuch verfahren werden. Zudem kann die radiale Bewegung des Saugbalkens an den Verschmutzungsgrad der durch den Scheibenfilter zu reinigenden Flüssigkeit angepasst werden.

Dabei besteht eine bevorzugte Ausgestaltung der Erfindung darin, dass der Positionierungsantrieb hydraulisch betrieben ist.

Eine weitere Ausgestaltung der Erfindung besteht darin, dass der Saugbalken in eine Position außerhalb der Lücke zwischen den scheibenförmigen Filterkörpern verfahrbar ist.

Vorteilhaft können die Saugbalken durch das Verfahren außerhalb der Lücke zwischen den scheibenförmigen Filterkörpern einfacherer auf Beschädigungen untersucht, gewartet, gereinigt oder ausgetauscht werden.

Schließlich besteht die Erfindung aus einem Verfahren zum Filtrieren von Flüssigkeiten mit einem Scheibenfilter mit einer Absaugvorrichtung gemäß einem der einem der vorangegangenen Ansprüche, bei dem die zu filtrierende Flüssigkeit durch ein Filtertuch geleitet wird und bei der das Filtertuch in zeitlichen Abständen mit der Absaugvorrichtung rückgespült wird.

Die erfindungsgemäße Absaugvorrichtung kann sowohl bei neuen Scheibenfiltern verwendet werden als auch bei bereits vorhandenen Scheibenfiltern nachgerüstet werden.

Nachfolgend wird ein Ausführungsbeispiel der Erfindung anhand einer Zeichnung näher beschrieben.

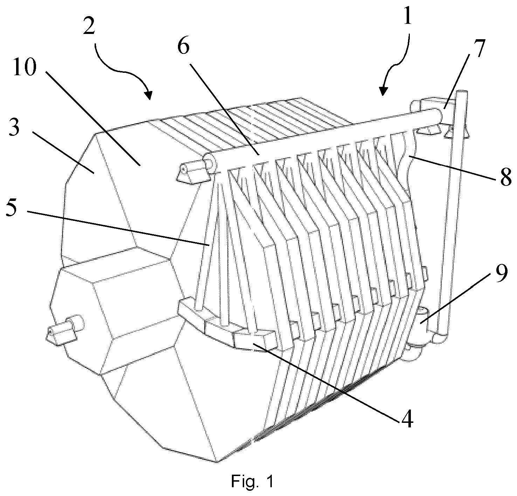

Es zeigt
- Fig. 1: eine perspektivische Ansicht einer erfindungsgemäßen Absaugvorrichtung im an einen Scheibenfilter montierten Zustand.

In Fig. 1 ist eine erfindungsgemäße Absaugvorrichtung 1 an einen Scheibenfilter 2 dargestellt. Die Absaugvorrichtung 1 besteht aus mehreren scheibenförmigen Filterkörpern 3, die einen Tragrahmen aufweisen, der mit Filtertuch 10 bespannt ist. Im Betrieb rotiert der Scheibenfilter 2 um seine Drehachse. Dabei ist der Scheibenfilter in ein Becken mit zu filtrierender Flüssigkeit eingetaucht. Die zu filtrierende Flüssigkeit passiert das Filtertuch 10 von außen nach innen, wobei Festkörper aus der Flüssigkeit herausgefiltert werden. Aus dem Inneren des Scheibenfilters kann das gefilterte Wasser, beispielsweise über eine Pumpe, entnommen werden.

Die Absaugvorrichtung besteht aus einem Saugbalken 4 zum Rückspülen des Filtertuches 10. Beim Rückspülen wird das Filtertuch 10 in einer zur Filterrichtung entgegengesetzten Richtung mit einer Flüssigkeit, wie beispielsweise Frischwasser oder Filtrat, durchspült. Dadurch können Feststoffpartikel, die im Filtertuch 10 festgehalten werden, wieder gelöst werden.

Der Saugbalken 4 ist mit einem steifen Saugarm 5 verbunden. Über den Saugarm 5 ist der Saugbalken 4 in einer Pendelbewegung verfahrbar und die durch den Saugbalken 4 angesaugte Flüssigkeit ableitbar. Durch die Pendelbewegung wird der Saugbalken 4 radial zur Drehachse des Scheibenfilters 2 verfahren. In der Figur sind beispielhaft drei Positionen des Saugbalkens dargestellt. Dies ist die Position mit dem kleinsten Radius des scheibenförmigen Filterkörpers 3, eine mittlere Position und die Position mit dem größten Radius. Der Saugbalken 4 kann dabei kontinuierlich oder stufenweise verfahren werden. Durch die Pendelbewegung des Saugbalkens 4 kann die gesamte Fläche des Filtertuchs 10 des scheibenförmigen Filterkörpers 3 zurückgespült werden. Die Länge des Saugarms 5 ist so ausgestaltet, dass der Saugbalken 4 in jeder Position der Pendelbewegung sich unterhalb der Flüssigkeitsoberfläche befindet.

Der Saugbalken 4 ist dabei mit Ausnahme der beiden äußersten Saugbalken 4 in der Lücke zwischen den scheibenförmigen Filterkörpern 3 angebracht. Die in der in der Lücke zwischen den scheibenförmigen Filterkörpern 3 angebrachten Saugbalken 4 besitzen Absaugschlitze zum Rückspülen der jeweiligen Filtertücher 10 der beiden scheibenförmigen Filterkörper 3.

Die Saugbalken 4 sind über den Saugarm 5 mit der Sammelleitung 6 verbunden. Über die Sammelleitung 6 wird die abgesaugte Flüssigkeit abgeleitet. Die Sammelleitung 6 ist verwindungssteif und wird durch den Positionierungsantrieb 7 gedreht. Durch die Drehung der Sammelleitung 6 werden über die Saugarme 5 die Saugbalken 4 in einer Pendelbewegung verfahren. Die Sammelleitung ist über eine flexible Schlauchverbindung 8 mit der Absaugpumpe 9 verbunden.

## Patentansprüche

1. Scheibenfilter (2) mit einer Absaugvorrichtung (1), wobei die Absaugvorrichtung (1) mindestens einen Saugbalken (4) pro scheibenförmigen Filterkörper (3) und einen zum Absaugen der Verunreinigungen des Filtertuches (10) ausgebildeten Absaugschlitz sowie eine Absaugpumpe (9) zum Absaugen der Verunreinigungen aufweist, wobei der Saugbalken (4) radial zu der Drehachse des Scheibenfilters (2) verfahrbar ist und der Abstand des Saugbalkens (4) von dem Filtertuch (10) verstellbar ist, **dadurch gekennzeichnet, dass** das Filtertuch (10) aus einem Polstoff besteht und dass die Breite des Saugbalkens (4) kleiner als der Radius der scheibenförmigen Filterkörper (3) ist, wobei der Saugbalken (4) von einer Position, die dem kleinsten Radius des scheibenförmigen Filterkörpers (3) entspricht, bis zu einer Position, die dem größten Radius des scheibenförmigen Filterkörpers (3) entspricht, verfahrbar ist.

2. Scheibenfilter (2) mit einer Absaugvorrichtung (1) gemäß Anspruch 1, **dadurch gekennzeichnet, dass** in der Lücke zwischen jeweils zwei scheibenförmigen Filterkörpern (3) ein Saugbalken (4) vorgesehen ist.

3. Scheibenfilter (2) mit einer Absaugvorrichtung (1) gemäß einem der vorangegangenen Ansprüche, **dadurch gekennzeichnet, dass** der Saugbalken (4) linear verfahrbar ist.

4. Scheibenfilter (2) mit einer Absaugvorrichtung (1) gemäß einem der Ansprüche 1 bis 3, **dadurch gekennzeichnet, dass** der Saugbalken (4) über einen Saugarm (5) in einer Pendelbewegung verfahrbar ist.

5. Scheibenfilter (2) mit einer Absaugvorrichtung (1) gemäß Anspruch 4, **dadurch gekennzeichnet, dass** die Absaugvorrichtung (1) im Drehpunkt der Saugbalken (4) eine Sammelleitung (6), die parallel zur Drehachse des Scheibenfilters (2) angeordnet ist, aufweist.

6. Scheibenfilter (2) mit einer Absaugvorrichtung (1) gemäß Anspruch 5, **dadurch gekennzeichnet, dass** die Sammelleitung (6) über eine flexible Schlauchverbindung (8) mit der Absaugpumpe (9) verbunden ist.

7. Scheibenfilter (2) mit einer Absaugvorrichtung (1) gemäß einem der vorangegangenen Ansprüche, **dadurch gekennzeichnet, dass** der Saugbalken (4) über einen vom Rotationsmotor des Scheibenfilters (2) entkoppelten Positionierungsantrieb (7) verfahrbar ist.

8. Scheibenfilter (2) mit einer Absaugvorrichtung (1) gemäß Anspruch 7, **dadurch gekennzeichnet, dass** der Positionierungsantrieb (7) hydraulisch betrieben ist.

9. Scheibenfilter (2) mit einer Absaugvorrichtung (1) gemäß einem der vorangegangenen Ansprüche, **dadurch gekennzeichnet, dass** der Saugbalken (4) in eine Position außerhalb der Lücke zwischen den scheibenförmigen Filterkörpern (3) verfahrbar ist.

10. Verfahren zum Filtrieren von Flüssigkeiten mit einem Scheibenfilter (2) mit einer Absaugvorrichtung (1) gemäß einem der vorangegangenen Ansprüche, bei dem die zu filtrierende Flüssigkeit durch ein Filtertuch (10) geleitet wird und bei der das Filtertuch (10) in zeitlichen Abständen mit der Absaugvorrichtung rückgespült wird.

## Claims

1. Disc filter (2) having a suction device (1), wherein the suction device (1) comprises at least one suction bar (4) per discoid filter body (3) and a suction slit designed for suctioning the impurities of the filter cloth (10), as well as a suction pump (9) for suctioning the impurities, wherein the suction bar (4) is movable radially to the axis of rotation of the disc filter (2) and the spacing of the suction bar (4) from the filter cloth (10) is adjustable, **characterized in that** the filter cloth (10) consists of a pile fabric and **in that** the width of the suction bar (4) is smaller than the radius of the disc-shaped filter body (3), wherein the suction bar can be displaced from a position that corresponds to the smallest radius of the disc-shaped filter body to a position that corresponds to the largest radius of the disc-shaped filter body.

2. Disc filter (2) having a suction device (1) according to claim 1, **characterized in that** a suction bar (4) is provided in the gap between two discoid filter bodies (3) in each case.

3. Disc filter (2) having a suction device (1) according to any of the preceding claims, **characterized in that** the suction bar (4) is linearly movable.

4. Disc filter (2) having a suction device (1) according to any one of claims 1 to 3, **characterized in that** the suction bar (4) is movable in a pendulum movement by means of a suction arm (5).

5. Disc filter (2) having a suction device (1) according to claim 4, **characterized in that** the suction device (1) comprises a manifold (6) in the pivot point of the suction bar (4), which manifold is arranged in parallel with the axis of rotation of the disc filter (2).

6. Disc filter (2) having a suction device (1) according to claim 5, **characterized in that** the manifold (6) is connected to the suction pump (9) via a flexible tube connection (8).

7. Disc filter (2) having a suction device (1) according to any of the preceding claims, **characterized in that** the suction bar (4) is movable by means of a positioning drive (7) which is decoupled from the rotary motor of the disc filter (2).

8. Disc filter (2) having a suction device (1) according to claim 7, **characterized in that** the positioning drive (7) is operated hydraulically.

9. Disc filter (2) having a suction device (1) according to any of the preceding claims, **characterized in that** the suction bar (4) is movable into a position outside of the gap between the discoid filter bodies (3).

10. Method for filtering fluids by means of a disc filter (2), in which the fluid to be filtered is conducted through a filter cloth (10), and in which the filter cloth (10) is backwashed at intervals by means of a suction device (1) according to any of the preceding claims.

## Revendications

1. Filtre à disques (2) muni d'un dispositif d'aspiration (1), le dispositif d'aspiration (1) comprenant au moins une barre d'aspiration (4) par corps filtrant en forme de disque (3) et une fente d'aspiration conçue pour aspirer les impuretés du tissu filtrant (10), ainsi qu'une pompe d'aspiration (9) destinée à aspirer les impuretés, la barre d'aspiration (4) étant déplaçable radialement par rapport à l'axe de rotation du filtre à disques (2), et l'écartement de la barre d'aspiration (4) par rapport au tissu filtrant (10) étant réglable, **caractérisé en ce que** le tissu filtrant (10) est constitué d'un tissu à poils, et **en ce que** la largeur de la barre d'aspiration (4) est inférieure au rayon des corps filtrants en forme de disque (3), la barre d'aspiration (4) étant déplaçable d'une position correspondant au plus petit rayon du corps filtrant en forme de disque (3) jusqu'à une position correspondant au plus grand rayon du corps filtrant en forme de disque (3).

2. Filtre à disques (2) muni d'un dispositif d'aspiration (1) selon la revendication 1, **caractérisé en ce qu'**une barre d'aspiration (4) est prévue dans chaque espace compris entre deux corps filtrants en forme de disque (3).

3. Filtre à disques (2) muni d'un dispositif d'aspiration (1) selon l'une quelconque des revendications précédentes, **caractérisé en ce que** la barre d'aspiration (4) est déplaçable linéairement.

4. Filtre à disques (2) muni d'un dispositif d'aspiration (1) selon l'une des revendications 1 à 3, **caractérisé en ce que** la barre d'aspiration (4) est déplaçable suivant un mouvement pendulaire au moyen d'un bras d'aspiration (5).

5. Filtre à disques (2) muni d'un dispositif d'aspiration (1) selon la revendication 4, **caractérisé en ce que** le dispositif d'aspiration (1) présente, au point de pivotement de la barre d'aspiration (4), une conduite collectrice (6) disposée parallèlement à l'axe de rotation du filtre à disques (2).

6. Filtre à disques (2) muni d'un dispositif d'aspiration (1) selon la revendication 5, **caractérisé en ce que** la conduite collectrice (6) est reliée à la pompe d'aspiration (9) par un raccord de tuyau flexible (8).

7. Filtre à disques (2) muni d'un dispositif d'aspiration (1) selon l'une quelconque des revendications précédentes, **caractérisé en ce que** la barre d'aspiration (4) est déplaçable au moyen d'un entraînement de positionnement (7) découplé du moteur de rotation du filtre à disques (2).

8. Filtre à disques (2) muni d'un dispositif d'aspiration (1) selon la revendication 7, **caractérisé en ce que** l'entraînement de positionnement (7) est commandé hydrauliquement.

9. Filtre à disques (2) muni d'un dispositif d'aspiration (1) selon l'une quelconque des revendications précédentes, **caractérisé en ce que** la barre d'aspiration (4) est déplaçable dans une position située en dehors de l'espace compris entre les corps filtrants en forme de disque (3).

10. Procédé de filtration de liquides au moyen d'un filtre à disques (2) muni d'un dispositif d'aspiration (1) selon l'une des revendications précédentes, procédé dans lequel le liquide à filtrer est conduit à travers un tissu filtrant (10) et dans lequel le tissu filtrant (10) est, à intervalles de temps, rincé en sens inverse au moyen du dispositif d'aspiration.
